(19) Europäisches Patentamt
European Patent Office
Office européen des brevets

(11) Publication number: **0 090 558**
**A1**

# (12) EUROPEAN PATENT APPLICATION

(21) Application number: 83301506.8

(22) Date of filing: 17.03.83

(51) Int. Cl.³: C 08 L 33/12, C 08 L 33/10, G 02 B 1/04, B 29 D 11/00

(30) Priority: 20.03.82 JP 45134/82

(43) Date of publication of application: 05.10.83 Bulletin 83/40

(84) Designated Contracting States: DE FR GB

(71) Applicant: KONISHIROKU PHOTO INDUSTRY CO. LTD., No. 26-2, Nishishinjuku 1-chome Shinjuku-ku, Tokyo 160 (JP)

(72) Inventor: Kawakami, Sota, 5-19, Ohwada-Cho 2-chome, Hachioji-shi Tokyo 192 (JP)
Inventor: Matsunaga, Satoshi, 45-7, Tamadaira 6-Chome, Hino-Shi Tokyo 191 (JP)
Inventor: Murata, Hideki, 6-1101, Haijima-Heights No. 3811-1, Haijima-Cho Akishima-Shi Tokyo 196 (JP)
Inventor: Kiriki, Toshihiko, 5-19, Ohwada-Cho 2-Chome, Hachioji-Shi Tokyo 192 (JP)

(74) Representative: Burnside, Michael et al, c/o Michael Burnside & Partners 2 Serjeants' Inn Fleet Street, London EC4Y 1HL (GB)

## (54) Optical element and optical resin composition for the preparation thereof.

(57) An optical element prepared by an injection molding, a compression molding or the like, comprises an optical resin composition consisting essentially of a polymer selected from the group consisting of a copolymer of a cyclohexyl methacrylate with at least one other a methyl methacrylate and a copolymer of a methylcyclohexyl methacrylate with at least one other ethyl methacrylate, the element having invariable surface evenness, high resistibility against heat and impact, low birefringence and the like as its native characteristics.

EP 0 090 558 A1

# OPTICAL ELEMENT AND OPTICAL RESIN COMPOSITION FOR THE PREPARATION THEREOF

## FIELD OF THE INVENTION

The present invention relates to an optical plastic element prepared by an injection molding, a compression molding or the like. The present invention also relates to an optical resin composition to be used for the preparation of said optical plastic element.

## BACKGROUND OF THE INVENTION

Heretofore, optical plastic element have been manufactured generally by molding widely usable plastic materials such as polystyrene type resins, polycarbonate resins, polymethyl methacrylate resins and polycyclohexyl methacrylate resins, and are of late years in great demand on the ground of their good natures that they ar light in weight, able to give lenses having non-spherical surfaces and easily mass-produced.

The optical plastic elements thus manufactured from the widely usable plastic materials, however, have several disadvantages that the optical elements manufactured from polymethyl methacrylate resins have too much absorbability of water to lose surface evenness and gain some changes of refractive index, so that they are apt to harm the stability of the optical systems in which they are employed. The optical elements manufactured from polystyrene type resins or polycarbonate resins have a great degree of birefringence and chromatic aberration, and are apt to generate scattering lights and lose opaqueness in the courses of their practical

uses. The optical elements manufactured from polycyclohexyl methacrylate resins have low impact resistivity and therefore are brittle. On account of these disadvantages, the optical elements manufactured from the widely usable resins, in fact, have many limitations in their practical uses.

In particular, in the field of fine optics where the optical elements are used for the reading and writing of information by means of laser or the like, the resin materials to be used for the preparation of the optical elements having such an usage are required to have critical characteristics that they have little variations of surface evenness under any changes of the environmental conditions, and that they have a low degree of birefringence and high resistivity against heat and impact.

## SUMMARY OF THE INVENTION

One object of the present invention, therefore, is to provide an optical resin composition and an optical element which have invariable characteristics such as surface evenness under any changes of the environmental conditions.

Another object of the present invention is to provide an optical resin composition which has high resistivity against heat and impact, and which has good adaptability to the molding process.

Still another object of the present invention is to provide an optical resin compotition which can get low birefringence after molded by an injection molding, a compression molding or the like.

These objects mentioned above of the present invention are accomplished by an optical resin composition which includes as the main component a copolymer (hereinunder referred to as the copolymer according to the present invention) made up mainly of a pair of major monomer components consisting in combination of cyclohexyl methacrylate and methyl methacrylate, or consisting in combination of methylcyclohexyl methacrylate and methyl metahcrylate.

These objects mentioned above of the present invention are also accomplished by an optical element which is prepared by molding the optical resin composition including as the main component the copolymer according to the present invention.

DETAILED DESCRIPTION OF THE INVENTION

The copolymer according to the present invention is defined as a copolymer containing 90 % by weight or more of the pair of major monomer components consisting in combination of cyclohexyl metahcrylate and methyl metahcrylate, or consisting in combination of methylcyclohexyl metahcrylate and methyl methacrylate.

As compared with the molding products manufactured from polymethyl methacrylate resins, the molding products prepared by molding the optical resin composition according to the present invention has well-improved water absorption characteristic in the nature thereof.

The improvements of the inherent characteristics such as water absorbability of the optical resin composition into stable states are much available to advance reliance of the

characteristics of the entire optical system in which the optical elements prepared from the optical resin composition are used and are liable to lose surface evenness and gain some changes of the refractive index under changes of the environmental conditions.

The optical plastic elements are usually molding products prepared by the steps comprising melting a resin and cooling the thus melted resin in a mold. In case the resin composition has high viscosity when melted, the molten resin composition is liable to be unevenly cooled, so that the molding product remains to have optical strain which results in some degree of birefringence. Particularly, in the case of the injection molding in which the molten resin is injected into the mold, the highly viscous molten resin is cooled while the orientation of the resin remains in the direction it flows; thus the molding product is liable to have birefringence.

As is well known to the art, the birefringence is a phenomenon in which an incident ray of light incided into a medium is split into two rays called ordinary and extraordinary rays. The ordinary and extraordinary rays are propagated with different velocities from each other and thus have a phase difference therebetween. The phase difference is defined by the expression

$\phi = \frac{2\pi}{\lambda} (N_o - N_c)t$ (in which $n_o$ and $n_c$ represent refractive indexes of the ordinary ray and the extraordinary ray, respectively, t represents the thickness of the medium, and

λ represents the wavelength of the ray of light in the air). The birefringence of the medium can be estimated by determining the phase difference by way of the optical measurements thereof.

The optical element prepared by molding the optical resin composition which includes as the main component the copolymer according to the present invention may have a low degree of birefringence and other well-improved natures as compared with the optical elements manufactured from styrene type resins.

The molding products prepared from the copolymer according to the present invention may have an improved impact resistivity which can not be attained by the molding product manufactured from polycyclohexyl methacrylate alone. The thus-improved impact resistivity of the molding product may function as the most important characteristic feature when the molding product is used in the fine optical system.

With respect to the optical resin composition according to the present invention, cyclohexyl methacrylate or methylcyclohexyl methacrylate used as a monomer component to be employed in the copolymerazation with methyl methacrylate may give notable improvements in the resin characteristics of the optical resin composition.

The copolymerization ratio of cyclohexyl methacrylate/methyl methacrylate or methylcyclohexyl methacrylate/methyl methacrylate may range from 10/90 to 90/10, preferably from 40/60 to 60/40. The copolymer including 10 % by weight or more of methyl methacrylate according to the present invention

may have well-improved impact resistivity. Moreover, the copolymer including 90 % by weight or less of methyl methacrylate has well-improved water absorbability.

The methyl cyclohexyl methacrylate to be used in the present invention includes, in addition to those of which one methyl group has been substituted by a cyclohexyl group, those of which two or more have been substituted. However, in the present invention, as the number of methyl groups increases, the impact strength of the resulting element lowers, so the monomethyl cyclohexyl methacrylate with only one methyl group substituted is preferable, the site of the methyl group to be substituted being optional. The copolymer according to the present invention may constitute a novel optical resin composition having a well-reduced rate of water absorption. The optical element prepared by molding the optical resin composition thus constituted according to the present invention may also have a well-reduced rate of water absorption, so that it has little variation in surface evenness due to its water absorption. In accordance with the present invention, the water absorption is defined in comformity with ASTM-570 Standard. In view of this Standard, the great value of water absorption symbolizes the water absorption of more than or equal to 0.3 %. The surface evenness in accordance with the present invention may be determined by the optical measurements of the Newton's rings. Moreover, the impact resistance according to the present invention may be determined in comformity with ASTM-256 Standard (Izod type test).

The optical resin composition according to the present invention may contain 10 % by weight or less of monomer components other than cyclohexyl methacrylate, methylcyclohexyl methacrylate and methyl methacrylate. Any of the monomer components may be used if it should not harm transparency of the resin after copolymerization. Preferable examples of the usable monomer components in accordance with the present invention are halogenostyrenes such as chlorostyrene, bromostyrene, iodostyrene and halogenostyrenes having plural halogen substituents in the benzene nucleus, alkyl-substituted styrenes having one or more bulky alkyl groups such as t-butyl and t-amyl groups in the benzene nucleus, alkyloxy styrenes having one or more alkyloxy or aryloxy groups such as phenoxy, benzyloxy and t-butoxy groups in the benzene nucleus, alkylthio styrenes having one or more alkylthio or arylthio groups such as phenylthio and mercapto groups in the benzene nucleus, esters of acrylic or methacrylic acid such as adamantyl methacrylate, iso-bornyl methacrylate, glycidyl methacrylate and a series of acrylic acid or methacrylic acid esters used for the polymerization syntheses as described in Japanese Patent Publication No. 2519/1976, phenyl methacrylate having one or more halogen substituents introduced into the benzene nucleus, conjugated nitriles such as acrylonitrile and methacrylonitrile, esters of polyvalent alcohols and methacrilic acid such as ethylene glycol, diethylene glycol, pentaerythritol and trimethyrol propane, and ethers of alkyl and aryl groups such as aryldiglycol carbonate.

The copolymer according to the present invention can be

prepared by any known copolymerization method such as emulsion polymerization, solution polymerization, block polymerization and radiation polymerization.

The optical resin composition according to the present invention may contain an ultra-violet absorbing agent for the purpose of advancing durability against exposure of light. Usable ultra-violet absorbing agents are those which should not harm the inherent resin characteristics and which should not reduce the transmittance of the visible light. The examples of the usable ultra-violet absorbing agents are phenyl o-hydroxysalicilate type compounds, o-hydroxybenzophenone, type compounds, 2-(o-hydroxyphenyl)benzotriazole type compounds and cyano acrylate type compounds.

The optical resin composition according to the present invention may also contain thermally stabilizing agent such as 2,6-di-t-butyl p-cresol, 2,4-dimethyl-6-t-butyl phenol, 2,2'-methylenebis(4-methyl-6-butyl phenol), 4,4'-butylidenebis(3-methyl-6-t-butyl phenol), 4,4'-thiobis(3-methyl-6-t-butyl phenol), 1,1,3-tris(2-methyl-4-hydroxy-5-t-butylphenyl) butan,

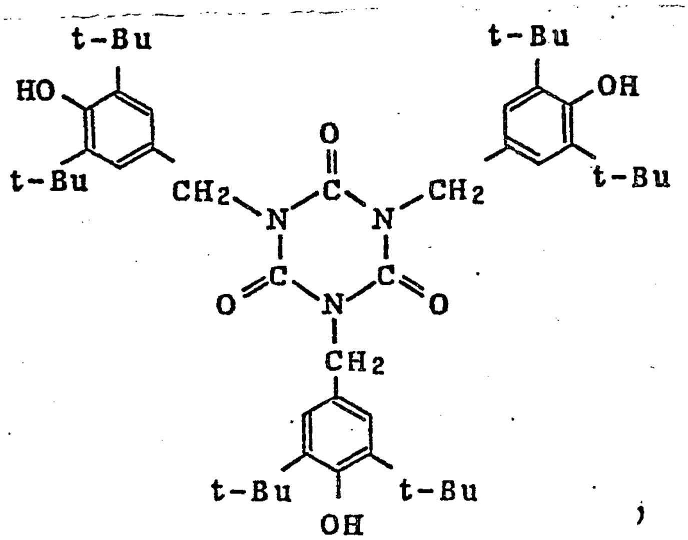

;

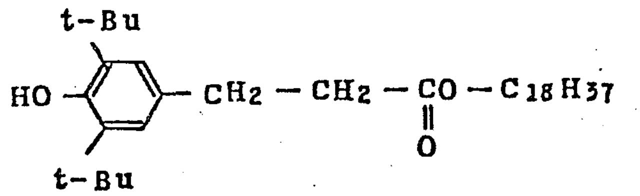

,

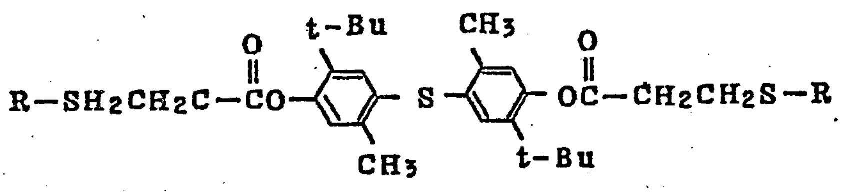

(wherein R represents an alkyl radical having 12 to 14 carbon atoms),

dilaurylthio dipropionate, ditsearylthio dipropionate, distearylthio dipropionate, distearyl-β, β-thio dibutylate,

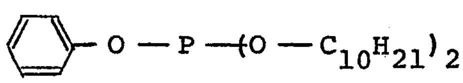 , 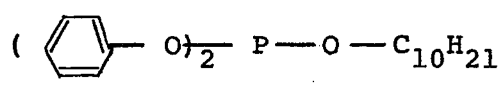 and

$P-(O-C_{10}H_{21})_3$ .

In order to increase fluidity of the molten resin, the optical resin composition according to the present invention may contain one or more plasticizers which can function as normally efficacious plasticizer. Usable plasticizers are, by way of example, alkyl phtharates such as 2-ethylhexyl phtharate, n-butyl phtharate, i-decanyl phtharate, tridecanyl phtharate, heptyl phtahrate and nonyl phtharate, alkyl esters of dibasic acids such as 2-ethyl hexyl adipate and 2-ethylhexyl sebacate, alkyl esters of phosphoric acid such as

tributyl phosphate, trioctyl phosphate, tricresyl phosphate and triphenyl phosphate, epoxydized esters of aliphatic acids such as epoxidized octyl oleate and epoxidized butyl oleate, polyester type plasticizers and chlorinated esters of aliphatic acids.

The optical resin composition according to the present invention may contain a parting agent such as silicone oil, dimethylpolysiloxanes, polysiloxanes, liquid or solid paraffin, butylicacid phosphate, butoxyethylicacid phosphate, 2-ethylhexylicacid phosphate, 2-ethylhexylicacid phosphate, b-chloro-ethylicacid phosphate, di9(2-ethylhexyl) phosphate, ethyleneglycolic acid phosphate, (2-2-hydroxyethyl)methacrylicacid phosphate and alkylacryl origomers.

The optical element according to the present invention can be prepared by molding the optical resin composition according to the present invention by way of any known molding methods which comprise completely or halfway melting the resin and molding the thus melted resin, such as an injection molding, a compression molding and blended methods of the injection molding and the compression molding such as Lawlink's method and a micromolding method.

The optical element prepared by molding the optical resin composition according to the present invention may have well improved characteristics invariable under any changes of the environmental conditions. The surface of the molding product according to the present invention may be coated in order to prevent of the humidification of the molding product and, consequently, to advance much more the dimention stability of

the molding product.

The optical element which is prepared by molding the optical resin composition accordign to the present invention, is used as the elemetns which have the functions appearing while the ray of light passes therethrough or reflect therefrom. The optical element according to the present invention may be exemplified by the lenses such as used in still-camera, video camera, telescope, spectacles, contact lenses and a collector for the sun's light, prisms such as pentaprism, mirrors such as concave spherical mirror and polygon mirror, optical fibers, light-conductive elements used in light waveguide, and discs such as audio disc and video disc.

The present invention is more sprecifically described accompanied with the following Examples and Comparative Examples which should not limit the scope of the present invention.

Example 1

Into the reaction vessel equipped with a condenser, a gas inlet, a thermometer and a stirrer, was put 1.0 part by weight of calsium phosphate, 0.01 part by weight of sodium dodecylbenzenesulfonate and 200 parts by weight of distilled water and introduced the following resin composition.

(resin composition)

| | |
|---|---|
| cyclohexyl methacrylate | 50 parts by weight |
| methyl methacrylate | 50 parts by weight |
| lauroyl peroxide | 0.1 part by weight |
| butyl acrylate oligomer (Adeca-Argas Company, MARK FC-112) | 0.5 part by weight |

After the introduction of the composition, the mixture was subjected to copolymerization reaction at 70 °C for six hours. The thus copolymerized mixture was then subjected to washings with hydrochloride and water, filtration and drying to obtain a copolymer.

The copolymer thus obtained was added with 0.2 part by weight of 2,6-di-t-butyl-4-methyl phenol as a thermally stabilizing agent and 0.1 part by weight of a benzotriazole compound (Jyohoku Chemical Company, JF-77) as an ultra-violet absorbing agent and molded to have a pellet-like shape. The pellet of the composition was subjected to the injection molding at the resin temperature of 230 °C to give a plastic lens which has a thickness of 3 mm in the central portion thereof (hereinunder referred to as the lens sample-1 according to the present invention).

Example 2

The lens sample-2 according to the present invention was prepared in the same manner as in Example 1, provided that methylcyclohexyl methacrylate was used instead of cyclohexyl methacrylate.

Example 3

The lens sample-3 according to the present invention was prepared in the same manner as in Example 1, provided that 70 parts by weight of cyclohexyl methacrylate and 30 parts by weight of methyl methacrylate were used instead of 50 parts by weight of cyclohexyl methacrylate and 50 parts by weight of methyl methacrylate.

Example 4

The lens sample-4 according to the present invention was prepared in the same manner as in Example 1, provided that 30 parts by weight of cyclohexyl methacrylate and 70 parts by weight of methyl methacrylate were used instead of 50 parts by weight of cyclohexyl methacrylate and 50 parts by weight of methyl methacrylate.

Example 5

The lens sample-5 according to the present invention was prepared in the same manner as in Example 1, provided that 50 parts by weight of cyclohexyl methacrylate, 45 parts by weight of methyl methacrylate and 5 parts by weight of styrene were used instead of 50 parts by weight of cyclohexyl methacrylate and 50 parts by weight of methyl methacrylate.

Comparative Example 1

The comparative lens sample-1 was prepared in the same manner as in Example 1, provided that 100 parts by weight of methyl methacrylate was used instead of 50 parts by weight of cyclohexyl methacrylate and 50 parts by weight of methyl methacrylate.

Comparative Example 2

The comparative lens sample-2 was prepared in the same manner as in Example 1, provided that 100 parts by weight of cyclohexyl methacrylate was used instead of 50 parts by weight of cyclohexyl methacrylate and 50 parts by weight of methyl methacrylate.

Comparative Example 3

The comparative lens sample 3 was prepared in the same manner as in Example 1, provided that 100 parts by weight of

polystyrene (Asahi-Dow Company, Styron 685) was used instead of 50 parts by weight of cyclohexyl methacrylate and 50 parts by weight of methyl methacrylate.

The inhereitcharacteristics of the lens sample-1 to 5 and the comparative lens sample-1 to 3 were determined by the optical measurement or the like and tabulated in the following Tabel 1.

Table 1

| Sample No. | Percentage Water Absorption | Impact Resistivity | Surface Evenness | Phase Difference (degree) |
|---|---|---|---|---|
| The lens sample-1 according to the present invention | 0.10 | 1.8 | 0-1 | 15 |
| The lens sample-2 according to the present invention | 0.08 | 1.8 | 0-1 | 15 |
| The lens sample-3 according to the present invention | 0.06 | 1.6 | 0-1 | 15 |
| The lens sample-4 according to the present invention | 0.16 | 2.0 | 0-1 | 15 |
| The lens sample-5 according to the present invention | 0.09 | 2.0 | 0-1 | 15 |
| The comparative lens sample-1 | 0.30 | 2.0 | 3 | 10 |
| The comparative lens sample-2 | 0.03 | 0.1 | 0 | 20 |
| The comparative lens sample-3 | 0.03 | - | 0 | 300 |

As is well understood from Table 1, the optical resin composition according to the present invention has improved characteristics such as water absorbability, impact resistivity and double refraction. The optical element according to the present invention also has well reduced water absorbability and therefore narrow variation of the surface evenness.

What is claimed is:

1. An optical element comprizing an optical resin composition consisting essentially of a polymer selected from the group consisting of a copolymer of a cyclohexyl methacrylate with at least one other a methyl methacrylate and a copolymer of a methylcyclohexyl methacrylate with at least one other methyl methacrylate.

2. An optical element according to Claim 1, wherein said polymer includes 10 % by weight or more of methyl methacrylate.

3. An optical element according to Claim 2, wherein said polymer includes 90 % by weight or less of methyl methacrylate.

4. An optical element according to Claim 1, wherein said methylcyclohexyl methacrylate is a monomethylcyclohexyl methacrylate.

5. An optical element according to Claim 3, wherein the copolymerization ratio of said cyclohexyl methacrylate/methyl methacrylate or said methylcyclohexyl methacrylate/methyl methacrylate ranges from 40/60 to 60/40.

6. An optical element according to Claim 1, wherein said copolymers are a copolymer of a cyclohexyl methacrylate with a methyl methacrylate and a copolymer of a methylcyclohexyl methacrylate with a methyl methacrylate.

7. An optical resin composition consisting essentially of a polymer selected from the group consisting of a copolymer of a cyclohexyl methacrylate with at least one other methyl methacrylate and a copolymer of a methylcyclohexyl methacrylate with at least one other methyl methacrylate.

8. An optical resin composition according to Claim 7, wherein said polymer includes 10 % by weight or more of methyl methacrylate.

9. An optical resin composition according to Claim 8, wherein said polymer includes 90 % by weight or less of methyl methacrylate.

10. An optical resin composition according to Claim 7, wherein said methylcyclohexyl methacrylate is a monomethylcyclohexyl methacrylate.

11. An optical resin composition according to Claim 9, wherein the copolymerization ratio of said cyclohexyl methacrylate/methyl methacrylate or said methylcyclohexyl methacrylate/methyl methacrylate ranges from 40/60 to 60/40.

12. An optical resin composition according to Claim 7, wherein said copolymers are a copolymer of a cyclohexyl methacrylate with a methyl methacrylate and a copolymer of a methylcyclohexyl methacrylate with a methyl methacrylate.

0090558

European Patent Office

# EUROPEAN SEARCH REPORT

Application number

EP 83 30 1506

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | DE-A-2 730 370 (AGFA-GEVAERT) *Claims* | 1 | C 08 L 33/12<br>C 08 L 33/10<br>G 02 B 1/04<br>B 29 D 11/00 |
| | --- | | |
| A | DE-A-2 635 691 (AGFA-GEVAERT) *Claims* | 1 | |
| | ----- | | |
| | | | TECHNICAL FIELDS SEARCHED (Int. Cl. 3) |
| | | | C 08 L 33/12<br>C 08 L 33/10<br>G 02 B 1/04<br>B 29 D 11/00 |

The present search report has been drawn up for all claims

| Place of search | Date of completion of the search | Examiner |
|---|---|---|
| THE HAGUE | 10-06-1983 | FOUQUIER J.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82